# EUROPÄISCHE PATENTSCHRIFT

(11) **EP 2 986 465 B1**
(45) Veröffentlichungstag und Bekanntmachung des Hinweises auf die Patenterteilung: **04.01.2017**
(21) Anmeldenummer: 14713383.9
(22) Anmeldetag: 21.03.2014
(51) Int. Cl.: B60K 37/00, B60K 37/04, G02B 27/01

(54) **HALTERUNG FÜR EINE IN EINEM KRAFTFAHRZEUG ZU HALTERNDE ANZEIGEEINRICHTUNG**
RETAINER FOR A DISPLAY DEVICE TO BE RETAINED IN A MOTOR VEHICLE
SYSTÈME DE FIXATION D'UN DISPOSITIF D'AFFICHAGE À FIXER DANS UN VÉHICULE AUTOMOBILE

(30) Priorität: 16.04.2013 DE 102013006557
(43) Veröffentlichungstag der Anmeldung: 24.02.2016
(73) Patentinhaber: Audi AG, 85045 Ingolstadt (DE)
(72) Erfinder: NONNENBROICH, Klaus, 85084 Reichertshofen (DE); HAUMER, Robert, 93333 Neustadt (DE)
(74) Vertreter: Mader, Wilfried
(86) Internationale Anmeldenummer: PCT/EP2014/000770
(87) Internationale Veröffentlichungsnummer: WO 2014/169986

(56) Entgegenhaltungen:
- WO-A2-01/33830
- WO-A2-2004/011302
- DE-A1- 3 644 049
- DE-A1-102011 118 853
- DE-C1- 19 721 969
- US-A- 4 108 025

## Beschreibung

Die Erfindung betrifft eine Halterung für eine in einem Kraftfahrzeug, insbesondere einer kraftfahrzeugseitigen Armatur, zu haltende, insbesondere einen Teil eines Head-Up-Displays bildende, Anzeigeeinrichtung, umfassend wenigstens einen Träger mit wenigstens einer Lagervorrichtung zur Lagerung der Anzeigeeinrichtung wobei die Lagervorrichtung über eine trägerseitig angeordnete Verstelleinrichtung relativ zu dem Träger lageverstellbar ist, wobei die Verstelleinrichtung ein relativ zu dem Träger lageverstellbares Stellelement mit einem ersten Kopplungsabschnitt zur Kopplung mit der Lagervorrichtung und mit einem zweiten Kopplungsabschnitt zur Kopplung mit dem Träger umfasst, wobei der zweite Kopplungsabschnitt umfangsmäßig mit einem zweiten Gewindeabschnitt versehen ist.

Solche Halterungen sind an und für sich bekannt und dienen der Lagerung bzw. Halterung von, insbesondere Teile eines Head-Up-Displays, bildenden, üblicherweise in Armaturen im Bereich einer Instrumententafel eines Kraftfahrzeugs angeordneten Anzeigeeinrichtungen. Derartige Halterungen müssen eine, insbesondere unter unterschiedlichen Betriebs- bzw. Fahrbedingungen eines Kraftfahrzeugs, stabile und exakte Lagerung entsprechender Anzeigeeinrichtungen gewährleisten, da diese für den ordnungsgemäßen Betrieb entsprechender Anzeigeeinrichtungen essentiell ist. Dies gilt insbesondere für die Lagerung von Teile von Head-Up-Displays bildenden Anzeigeeinrichtungen. Ferner müssen entsprechende Halterungen eine Möglichkeit bieten, über welche eine hochfeine Einstellung bzw. Justage der Lage bzw. Orientierung entsprechender Anzeigeeinrichtungen realisierbar ist.

Bekannte Halterungen sind zumeist insbesondere deshalb nicht zufriedenstellend, weil sie im Hinblick auf die Lagerung von Anzeigeeinrichtungen nicht die gewünschte Stabilität bzw. Einstellmöglichkeiten aufweisen.

Aus der gattungsbildenden Druckschrift US 4 108 025 A ist eine Einstelleinrichtung für ein Head-Up-Display eines Flugzeugs bekannt. Die Einstelleinrichtung wird starr an einem ersten Körper befestigt und ermöglicht seine Verstellung, indem eine Gabel gegen einen festen, an einem zweiten Körper angeordneten Vorsprung gepresst wird. Die Gabel ist durch eine Schraube verschiebbar.

Die Druckschrift DE 197 21 969 C1 offenbart eine Justagevorrichtung für einen Spiegel. Diese weist eine den Spiegel tragende Justierplatte und ein Gehäuse auf, in das der Spiegel wenigstens zum Teil hineinragt. Zwischen der Justierplatte und dem Gehäuse ist eine Verstelleinrichtung angeordnet, die einen zwei Gewinde mit unterschiedlichen Steigungen aufweisenden Gewindebolzen umfasst.

Eine an einem Dach eines Kraftfahrzeug befestigbare Monitoreinrichtung ist aus der Druckschrift WO 01/33830 A2 bekannt. Ein Gehäuse der Einrichtung kann verstellt werden, um eine Anordnung der Monitoreinrichtung in verschiedenen Fahrzeugen zu ermöglichen.

Die Druckschrift WO 2004/011302 A2 betrifft eine Scharnieranordnung für einen Spiegel einer Anzeigeeinrichtung. Diese umfasst eine Basis, die an einem Gehäuse der Anzeigeeinrichtung angeordnet ist. Die Basis weist einen longitudinalen Stift auf, wobei ein an dem Spiegel angeordnetes Scharnierelement diesen Stift zumindest teilweise umgibt.

Eine Anzeigevorrichtung, insbesondere ein Head-Up-Display, mit einem Beleuchtungsmittel, einer bildgebenden Einheit und einem Umlenkmittel ist aus der Druckschrift DE 10 2011 118 853 A1 bekannt.

Die Druckschrift DE 36 440 49 A1 offenbart eine Justiervorrichtung für ein optisches Element. Zur spiel- und kontaktfreien Feinjustierung des optischen Elements in zwei zueinander senkrechten Richtungen sind zwei selbsthemmende Differenzialschrauben mit unterschiedlichen Gewindesteigungen vorgesehen, wobei die erste Justierschraube in den Träger und das Zwischenelement und die zweite Justierschraube in das Zwischenelement und den Grundkörper eingeschraubt ist.

Der Erfindung liegt damit das Problem zugrunde, eine verbesserte Halterung für eine in einem Kraftfahrzeug, insbesondere einer kraftfahrzeugseitigen Armatur, zu halternde, insbesondere einen Teil eines Head-Up-Displays bildende, Anzeigeeinrichtung anzugeben.

Das Problem wird erfindungsgemäß durch eine Halterung der eingangs genannten Art gelöst, wobei der erste Kopplungsabschnitt umfangsmäßig mit einem ersten Gewindeabschnitt versehen ist, und wobei die beiden Gewindeabschnitte unterschiedliche Gewindesteigungen aufweisen.

Die erfindungsgemäße Halterung weist wenigstens einen Träger mit wenigstens einer Lagervorrichtung zur Lagerung der Anzeigeeinrichtung auf. Bei dem Träger oder, sofern die Halterung mehrere Träger umfasst, den Trägern, handelt es sich um das mit der Karosserie eines Kraftfahrzeugs zu verbindende Bauteil der Halterung. Die Lagervorrichtung dient der Lagerung bzw. eigentlichen Halterung der Anzeigeeinrichtung.

Die Lagervorrichtung ist über eine, insbesondere trägerseitig angeordnete, Verstelleinrichtung relativ zu dem Träger lageverstellbar, d. h. insbesondere höhenverstellbar. Die Lagervorrichtung kann demnach gegenüber dem feststehend an einer Karosserie zu montierenden Träger in einer vertikalen Verstellrichtung unterschiedliche Positionen einnehmen. Entsprechend kann auch die durch die Lagervorrichtung gelagerte Anzeigeeinrichtung derart gegenüber dem Träger in einer vertikalen Verstellrichtung unterschiedliche Positionen einnehmen bzw. in solchen positioniert werden. Die Verstelleinrichtung dient der genauen Positionierung, insbesondere im Sinne einer Feineinstellung bzw. Feinjustage, der durch die Lagervorrichtung gelagerten Anzeigeeinrichtung.

Die Verstelleinrichtung umfasst ein relativ zu dem Träger lageverstellbares, d. h. insbesondere höhenverstellbares Stellelement. Das Stellelement ist mit zwei Kopplungsabschnitten versehen. Ein erster Kopplungsabschnitt ist zur Kopplung des Stellelements mit der Lagervorrichtung ausgebildet. Der erste Kopplungsabschnitt stellt also eine unmittelbare oder mittelbare Verbindung des Stellelements mit der Lagervorrichtung her. Der erste Kopplungsabschnitt ist umfangsmäßig mit einem ersten Gewindeabschnitt versehen. Ein zweiter Kopplungsabschnitt ist zur Kopplung des Stellelements mit dem Träger ausgebildet. Der zweite Kopplungsabschnitt stellt also eine unmittelbare oder mittelbare Verbindung des Stellelements mit dem Träger her. Der zweite Kopplungsabschnitt ist umfangsmäßig mit einem zweiten Gewindeabschnitt versehen. Die an den jeweiligen stellelementseitigen Kopplungsabschnitten vorgesehenen-Gewindeabschnitte weisen unterschiedliche Gewindesteigungen auf.

Durch die mit unterschiedlichen Gewindesteigungen versehenen Gewindeabschnitte ist eine besonders exakte Feineinstellung der Höhenlage (z-Lage) des Stellelements, der mit diesem über den ersten Kopplungsabschnitt gekoppelten Lagervorrichtung für die Anzeigeeinrichtung und somit der Anzeigeeinrichtung insgesamt ermöglicht. Je nachdem, welche konkreten Gewindesteigungen an den jeweiligen Gewindeabschnitten vorgesehen sind, ergibt sich aus deren Differenz die tatsächliche Höhenverstellung des Stellelements und der daran gekoppelten Bauteile pro Umdrehung des Stellelements.

Bei dem ersten Gewindeabschnitt kann es sich z. B. um ein Gewinde mit einer Steigung von 0,8 mm pro voller Umdrehung (360°-Umdrehung) des Stellelements und bei dem zweiten Gewindeabschnitt z. B. um ein Gewinde mit einer Steigung von 1,25 mm pro voller Umdrehung des Stellelements handeln. Der erste Gewindeabschnitt kann in dem Beispiel sonach als ein M5-Gewinde gemäß der Nomenklatur für metrische ISO-Gewinde und der zweite Gewindeabschnitt in dem Beispiel sonach als M8-Gewinde gemäß der Nomenklatur für metrische ISO-Gewinde ausgebildet sein. Die Differenz der Gewindesteigungen liegt hier bei 0,45 mm pro Umdrehung des Stellelements. Selbstverständlich können die jeweiligen Gewindeabschnitte auch mit anderen als den beispielhaft Genannten versehen sein.

Der an dem Stellelement, d. h. insbesondere den diesem zugehörigen jeweiligen Kopplungsabschnitten vorgesehene erste und/oder zweite Gewindeabschnitt kann durch einen den ersten und/oder zweiten Kopplungsabschnitt klemmend umgebenden Gewindeeinsatz gebildet sein. Mithin muss nicht das Stellelement selbst mit entsprechenden Außengewinden versehen sein, sondern es können entsprechende Gewindeeinsätze an den jeweiligen stellelementseitigen Kopplungsabschnitten angebracht werden. Durch die Klemmung der Gewindeeinsätze an den jeweiligen Kopplungsabschnitten sind die Gewindeeinsätze drehfest mit dem Stellelement verbunden. Die Gewindeeinsätze sind selbstverständlich jeweils so ausgebildet, dass die an den stellelementseitigen Gewindeabschnitten vorzusehenden unterschiedlichen Gewindesteigungen realisiert sind. Mithin sind die an den jeweiligen stellelementseitigen Kopplungsabschnitten vorgesehenen Gewindeeinsätze mit unterschiedlichen Gewindesteigungen versehen.

Das Stellelement ist typischerweise als rotationssymmetrisches Bauteil ausgebildet. Das Stellelement kann demnach z. B. als Spindel ausgebildet sein, wobei der erste und der zweite Kopplungsabschnitt unterschiedliche Durchmesser aufweisen und der Durchmesser des ersten Kopplungsabschnitts kleiner als der Durchmesser des zweiten Kopplungsabschnitts ist. Das sonach insbesondere als Spindel ausgebildete Stellelement weist demnach zwei unterschiedliche, axial benachbarte Durchmesser auf. Im Bereich eines ersten Durchmessers ist der erste Kopplungsabschnitt vorgesehen, im Bereich eines zweiten Durchmessers ist der zweite Kopplungsabschnitt vorgesehen. Wie erwähnt, kann der erste Gewindeabschnitt als M5-Gewinde, d. h. als ein Gewinde mit einem Außendurchmesser von 5 mm und einer Gewindesteigung von 0,8 mm pro Umdrehung des Stellelements, und der zweite Gewindeabschnitt als M8-Gewinde, d. h. ein Gewinde mit einem Außendurchmesser von 8 mm und einer Gewindesteigung von 1,25 mm pro Umdrehung des Stellelements, ausgebildet sein.

In Weiterbildung der Erfindung kann in dem Träger ein Aufnahmebereich für das Stellelement ausgebildet sein, wobei der erste Kopplungsabschnitt des Stellelements in einem ersten Aufnahmebereichabschnitt mit einem ersten Durchmesser anordenbar oder angeordnet ist und der zweite Kopplungsabschnitt des Stellelements in einem zweiten Aufnahmebereichabschnitt mit einem zweiten Durchmesser anordenbar oder angeordnet ist. Der trägerseitige Aufnahmebereich kann z. B. eine Bohrung, insbesondere Sackbohrung, oder dergleichen sein. Der Aufnahmebereich ist in zwei axial benachbarte Aufnahmebereichabschnitte unterteilt. Ein im Hinblick auf die Außenkontur des Trägers weiter außen liegender erster Aufnahmebereichabschnitt ist für den ersten Kopplungsabschnitt vorgesehen. Ein im Hinblick auf die Außenkontur des Trägers weiter innen liegender zweiter Aufnahmebereichabschnitt ist für den zweiten Kopplungsabschnitt vorgesehen.

Die Aufnahmebereichabschnitte können unterschiedliche Innendurchmesser aufweisen. Insbesondere ist der für den zweiten Kopplungsabschnitt vorgesehene zweite Aufnahmebereichabschnitt mit einem an den Außendurchmesser des zweiten Kopplungsabschnitts angepassten Innendurchmesser versehen. Der für den ersten Kopplungsabschnitt vorgesehene Aufnahmebereichabschnitt ist typischerweise mit einem im Vergleich zu dem Außendurchmesser des ersten Kopplungsabschnitts größeren Innendurchmesser versehen. Entsprechend können in dem ersten Aufnahmebereichabschnitt neben dem ersten Kopplungsabschnitt weitere, der erfindungsgemäßen Halterung zugehörige Bauteile, wie insbesondere ein im Weiteren genanntes Kopplungsteil, angeordnet werden oder sein.

Alternativ kann auch eine in den Träger, d. h. in eine entsprechende trägerseitige Ausnehmung einzusetzende Hülsenelement vorgesehen sein, welche den trägerseitigen Aufnahmebereich für das Stellelement bildet. Das Hülsenelement kann derart gestaltet sein, dass es zwei Aufnahmebereichabschnitte aufweist. Analog zu oben kann der erste Kopplungsabschnitt des Stellelements in einem hülsenelementseitigen ersten Aufnahmebereichabschnitt mit einem ersten Durchmesser anordenbar oder angeordnet sein und der zweite Kopplungsabschnitt des Stellelements in einem hülsenelementseitigen zweiten Aufnahmebereichabschnitt mit einem zweiten Durchmesser anordenbar oder angeordnet sein.

Die Kopplung des Stellelements mit der Lagervorrichtung kann prinzipiell auf zwei unterschiedliche Arten erfolgen. Einerseits kann der erste Gewindeabschnitt des Stellelements unmittelbar in einen, insbesondere mit einem dem ersten Gewindeabschnitt entsprechenden Gegengewindeabschnitt versehenen, Teil der Lagervorrichtung greifen, wobei die Lagervorrichtung drehfest gelagert ist. Andererseits kann der erste Gewindeabschnitt in einen, insbesondere mit einem dem ersten Gewindeabschnitt entsprechenden Gegengewindeabschnitt versehenen, Teil eines zwischen dem ersten Kopplungsabschnitt und einem Teil der Lagervorrichtung angeordneten, die Lagervorrichtung lagernden Kopplungsteils greifen, wobei das Kopplungsteil drehfest gelagert ist.

In der ersten Variante greift ein, insbesondere hohlzylindrischer, Teil der Lagervorrichtung axial in den ersten Aufnahmebereichabschnitt des trägerseitigen Aufnahmebereichs ein. Über einen an diesem Teil der Lagervorrichtung vorgesehenen Gegengewindeabschnitt erfolgt eine Kopplung bzw. Verbindung der Lagervorrichtung mit dem an dem ersten Kopplungsabschnitt des Stellelements ausgebildeten ersten Gewindeabschnitt. Das Stellelement ist demnach unmittelbar an die Lagervorrichtung gekoppelt bzw. mit dieser verbunden. Die Lagervorrichtung ist drehfest gelagert, d. h. diese kann grundsätzlich nicht um ihre Längsachse verdreht werden. Insbesondere ist die Lagervorrichtung drehfest mit dem Träger verbunden. Dies kann z. B. durch eine Verdrehsicherung realisiert sein. Die Verdrehsicherung kann z. B. aus einem aus dem Träger ragenden Bolzen gebildet sein, welcher in oder durch eine hierfür vorgesehene Öffnung der Lagervorrichtung greift. Eine Drehung des Stellelements bedingt eine axiale Bewegung des Stellelements relativ zu dem Träger. Das Stellelement ist dabei insbesondere innerhalb des trägerseitigen Aufnahmebereichs axial bewegbar. Die Kopplung des Stellelements mit dem drehfest gelagerten Teil der Lagervorrichtung bewirkt dabei, dass die Lagervorrichtung bei Drehung des Stellelements, auch wenn sie sich selbst nicht dreht, zwangsläufig axial mitbewegt wird. Bewegt sich das Stellelement z. B. in den trägerseitigen Aufnahmebereich hinein, wird auch die Lagervorrichtung in den trägerseitigen Aufnahmebereich "hineingezogen".

In der zweiten Variante greift ein, insbesondere hohlzylindrisches oder einen hohlzylindrischen Abschnitt aufweisendes, Kopplungsteil axial in den ersten Aufnahmebereichabschnitt des trägerseitigen Aufnahmebereichs ein. Über einen an dem Kopplungsteil vorgesehenen Gegengewindeabschnitt erfolgt eine Kopplung bzw. Verbindung mit dem an dem ersten Kopplungsabschnitt des Stellelements ausgebildeten ersten Gewindeabschnitt. Das Kopplungsteil lagert die Lagervorrichtung. Da das Kopplungsteil sonach als Zwischenglied zwischen dem Stellelement und der Lagervorrichtung erachtet werden kann, ist das Stellelement in dieser Variante mittelbar über das Kopplungsteil an die Lagervorrichtung gekoppelt. Analog zu der Lagervorrichtung in der ersten Variante ist in dieser Variante das Kopplungsteil drehfest gelagert, d. h. das Kopplungsteil kann grundsätzlich nicht um seine Längsachse verdreht werden. Insbesondere ist das Kopplungsteil drehfest mit dem Träger verbunden. Dies kann auch hier z. B. durch eine Verdrehsicherung realisiert sein. Die Verdrehsicherung kann analog zu der ersten Variante z. B. aus einem aus dem Träger ragenden Bolzen gebildet sein, welcher in oder durch eine hierfür, z. B. an einem Flanschabschnitt des Kopplungsteils, vorgesehene Öffnung des Kopplungsteils greift. Die Kopplung des Stellelements mit dem drehfest gelagerten Kopplungsteil bewirkt, dass das Kopplungsteil bei Drehung des Stellelements, auch wenn es sich dabei selbst nicht dreht, zwangsläufig axial mitbewegt wird. Bewegt sich das Stellelement z. B. in den trägerseitigen Aufnahmebereich hinein, wird auch das Kopplungsteil in den Aufnahmebereich "hineingezogen".

Für beide Varianten gilt, dass durch axiale Bewegungen des Stellelements und die damit zwangsläufig verbundenen axialen Bewegungen der Lagervorrichtung, welche, wie erwähnt, unmittelbar oder mittelbar über das Kopplungsteil erfolgen, eine Verspannung der Lagervorrichtung bzw. des Kopplungsteils realisierbar ist. Die Verspannung führt zu einer besonders stabilen, d. h. lage- bzw. positionsstabilen Anordnungs- bzw. Positionierungsmöglichkeit der Lagervorrichtung und somit der Anzeigeeinrichtung. Die Verspannung führt zudem zu einer Art Selbsthemmung der Lagervorrichtung in einer über das Stellelement eingestellten Position, welche sicherstellt, dass die Lagervorrichtung ihre über das Stellelement eingestellte Lage bzw. Position nicht verlässt.

Für die beschriebenen Varianten ist es zweckmäßig, wenn der erste Gewindeabschnitt in einen dem Durchmesser des ersten Kopplungsabschnitts entsprechenden, insbesondere mit einem dem ersten Gewindeabschnitt entsprechenden Gegengewindeabschnitt versehenen, zylindrischen Aufnahmeraum des Kopplungsteils und der zweite Gewindeabschnitt in einen, insbesondere mit einem dem zweiten Gewindeabschnitt entsprechenden Gegengewindeabschnitt versehenen, dem Durchmesser des zweiten Kopplungsabschnitts entsprechenden zylindrischen Aufnahmeraum des Trägers greift. Mithin greift das Stellelement derart über den ersten Gewindeabschnitt unmittelbar in einen hierfür an dem Kopplungsteil vorgesehenen Aufnahmeraum. Der Aufnahmeraum ist derart bemessen, dass sein Innendurchmesser an den Außendurchmesser des ersten Kopplungsabschnitts des Stellelements angepasst ist. Der kopplungsteilseitige Aufnahmeraum kann hierfür mit einem dem stellelementseitigen ersten Gewindeabschnitt entsprechenden Gegengewinde bzw. Innengewinde versehen sein, so dass das Stellelement in das Kopplungsteil einschraubbar bzw. eingeschraubt ist. In gleicher Weise kann der stellelementseitige zweite Gewindeabschnitt in einen hierfür vorgesehenen trägerseitigen Aufnahmeraum eingeschraubt werden. Der trägerseitige zweite Aufnahmeraum ist derart bemessen, dass sein Innendurchmesser an den Außendurchmesser des zweiten Kopplungsabschnitts des Stellelements angepasst ist. Ferner kann der trägerseitige Aufnahmeraum mit einem dem stellelementseitigen zweiten Gewindeabschnitt entsprechenden Gegengewinde bzw. Innengewinde versehen, in welchen der zweite Gewindeabschnitt des Stellelements einschraubbar bzw. eingeschraubt ist. Die in dem Kopplungsteil respektive dem Träger vorgesehenen Gegengewinde können gleichermaßen durch Gewindeeinsätze gebildet sein, welche in den kopplungsteilseitigen bzw. trägerseitigen Aufnahmeräumen anzuordnen bzw. anzubringen sind.

Sofern das Stellelement über das Kopplungsteil an die Lagervorrichtung gekoppelt respektive mit dieser verbunden ist, ist es sonach zweckmäßig, wenn in dem Träger ein Aufnahmebereich für das Stellelement und das Kopplungsteil ausgebildet ist, wobei das Kopplungsteil in einem ersten Aufnahmebereichabschnitt mit einem ersten Durchmesser anordenbar oder angeordnet ist und der zweite Kopplungsabschnitt des Stellelements in einem zweiten Aufnahmebereichabschnitt mit einem zweiten Durchmesser anordenbar oder angeordnet ist. Der trägerseitige Aufnahmebereich ist sonach in zwei Abschnitte unterteilt. Ein erster Aufnahmebereichabschnitt dient der Aufnahme des Kopplungsteils und sonach des mit diesem zu verbindenden ersten Kopplungsabschnitts des Stellelements. Der Innendurchmesser des ersten Aufnahmebereichabschnitts ist typischerweise an den Außendurchmesser des Kopplungsteils angepasst. Ein zweiter Aufnahmebereichabschnitt dient auch hier der Aufnahme des zweiten Kopplungsabschnitts des Stellelements. Der trägerseitige zweite Aufnahmebereichabschnitt umfasst insbesondere den vorgenannten trägerseitigen zweiten Aufnahmeraum. Entsprechend ist der zweite Aufnahmeraum typischerweise durch den zweiten Aufnahmebereichabschnitt begrenzt.

Vorteilhaft weist die Lagervorrichtung eine Bohrung, insbesondere Durchgangsbohrung, auf, durch welche eine Zugangsmöglichkeit zu einer freiliegenden Stirnseite des Stellmittels gebildet ist. Über die in der Lagervorrichtung vorgesehene Bohrung, welche zweckmäßig axial mit dem in dem Träger, d. h. einem entsprechenden trägerseitigen Aufnahmebereich angeordneten Stellelement fluchtet, ist es demnach möglich, ein Werkzeug, d. h. insbesondere einen Schraubendreher einzuführen, an eine entsprechend als Schraubenkopfantrieb, z. B. Schlitz, Kreuzschlitz, Torx etc, ausgebildete oder mit einem solchen versehene Stirnseite des Stellelements anzusetzen und derart Drehmomente auf das Stellelement zu übertragen, um das Stellelement zum Zwecke der Feineinstellung, insbesondere der vertikalen z-Lage, der Anzeigeeinrichtung entweder weiter aus dem Träger heraus oder weiter in den Träger hinein zu bewegen. Das Stellelement kann also grundsätzlich in allen Ausführungsformen der Erfindung stirnseitig mit einem Schraubenkopfantrieb versehen sein.

Um eine Anbindung des Trägers an eine Fahrzeugkarosserie zu ermöglichen, ist in dem Träger vorteilhaft wenigstens eine Anbindungsstelle, insbesondere in Form einer Durchgangsbohrung, zur Anbindung des Trägers an eine Fahrzeugkarosserie ausgebildet. Durch die typischerweise als Durchgangsbohrung ausgebildete trägerseitige Anbindungsstelle ist der Träger und somit die gesamte erfindungsgemäße Halterung mit einer Fahrzeugkarosserie verbindbar. Zweckmäßig sind an dem Träger drei Anbindungsstellen in zueinander versetzter Anordnung vorgesehen. Über eine geeignete Positionierung der Anbindungsstellen an dem Träger ist es möglich, im Rahmen der Anbindung des Trägers an die Fahrzeugkarosserie eine Grobeinstellung der Position der Halterung und somit der Anzeigeeinrichtung vorzunehmen. Die Feineinstellung der Lage bzw. Ausrichtung der Anzeigeeinrichtung kann dann, wie vorstehend beschrieben, über die Stellvorrichtung erfolgen.

Bei dem Träger sollte es sich um ein aus einem hochsteifen Material gebildetes Bauteil handeln, so dass Bewegungen der Fahrzeugkarosserie im Betrieb des Kraftfahrzeugs nicht zu Eigenbewegungen des Trägers führen, welche dem ordnungsgemäßen Betrieb der Anzeigeeinrichtung, d. h. insbesondere eines Head-Up-Displays, stören bzw. eine ordnungsgemäße Anzeige der anzuzeigenden, d. h. insbesondere zu projizierenden, Bilder erschweren. Der Träger ist sonach zweckmäßig aus einem hochsteifen Kunststoffmaterial gebildet. Das Kunststoffmaterial ist vorteilhaft mit steifigkeitserhöhenden Verstärkungsfasern, wie insbesondere Glasfasern, versehen. Bei dem Kunststoffmaterial kann es sich z. B. um mit Glasfasern verstärktes Polyphenylensulfid (PPS) oder Polyamid (PA) handeln. Das verwendete Kunststoffmaterial sollte so gewählt werden, dass es auch eine ausreichende elektrische Isolation gegen Kriechströme u.ä. bietet.

Die erfindungsgemäße Halterung weist zweckmäßig zwei entsprechende Träger auf. Die Träger sind benachbart zueinander angeordnet. Hierunter ist zu verstehen, dass sich entsprechende Seitenflächen der Träger in einer parallelen Lage zueinander befinden. Die Ausbildung der erfindungsgemäßen Halterung mit zwei Trägern erhöht die Stabilität der Lagerung der Anzeigeeinrichtung und ist deshalb vorteilhaft. Die beiden Träger weisen jeweils zumindest eine entsprechende Lagervorrichtung, welche über eine entsprechende trägerseitig angeordnete Verstelleinrichtung relativ zu dem Träger lageverstellbar ist, auf. Jeder Träger bietet sonach zumindest einen lage- bzw. höhenverstellbaren Lagerpunkt für die Lagerung der Anzeigeeinrichtung.

In einer weiteren vorteilhaften Ausführungsform der Erfindung ist durch die beiden Träger eine Dreipunktlagerung der Anzeigeeinrichtung realisiert. Diese ergibt sich dadurch, dass an einem der beiden Träger zusätzlich zu der Lagervorrichtung ein weiterer Lagerpunkt zur Lagerung der Anzeigeeinrichtung ausgebildet ist. Der zusätzliche Lagerpunkt ist im Gegensatz zu den beiden Lagervorrichtungen nicht relativ zu dem Träger verstellbar. Insgesamt weist die erfindungsgemäße Halterung in dieser Ausführungsform sonach zwei relativ zu den Trägern lage- bzw. höhenverstellbare, durch die Lagervorrichtungen gebildete Lagerpunkte und einen festen Lagerpunkt auf.

Weitere Vorteile, Merkmale und Einzelheiten der Erfindung ergeben sich aus den im Folgenden beschriebenen Ausführungsbeispielen sowie anhand der Zeichnungen. Dabei zeigt:
- Fig. 1: eine perspektivische Darstellung einer Halterung gemäß einer beispielhaften Ausführungsform der Erfindung in einem mit einer Fahrzeugkarosserie verbundenen Zustand;
- Fig. 2 - 4: jeweils eine perspektivische Darstellung eines Trägers einer Halterung gemäß einer beispielhaften Ausführungsform der Erfindung;
- Fig. 5: eine geschnittene Ansicht eines Trägers einer Halterung gemäß einer beispielhaften Ausführungsform der Erfindung;
- Fig. 6: eine vergrößerte Ansicht der in Fig. 5 gezeigten Einzelheit VI;
- Fig. 7: eine vergrößerte Ansicht der in Fig. 5 gezeigten Einzelheit VI in einer Variante;
- Fig. 8: eine vergrößerte Ansicht der in Fig. 5 gezeigten Einzelheit VIII;
- Fig. 9 - 11: verschiedene Ansichten einer Lagervorrichtung samt einer Verstelleinrichtung einer Halterung gemäß einer beispielhaften Ausführungsform der Erfindung.

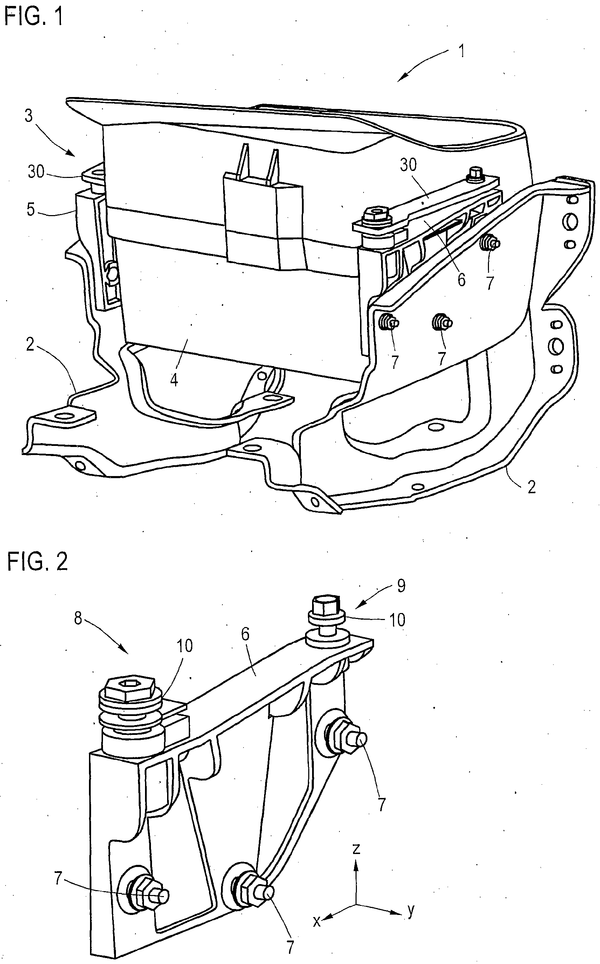

Fig. 1 zeigt eine perspektivische Darstellung einer Halterung 1 gemäß einer beispielhaften Ausführungsform der Erfindung in einem mit einer durch die Bauteile 2 angedeuteten Fahrzeugkarosserie verbundenen Zustand. Die Halterung 1 dient der Lagerung bzw. Halterung einer kraftfahrzeugseitigen Anzeigeeinrichtung 3 in Form eines Head-Up-Displays. Die Anzeigeeinrichtung 3 ist dabei teilweise in einem Gehäuse 4 aufgenommen. Wenn im Weiteren von der Anzeigeeinrichtung 3 die Rede ist, ist stets auch das Gehäuse 4 gemeint.

Der Halterung 1 sind zwei Träger 5, 6 zugehörig. Die Träger 5, 6 sind durch Befestigungsmittel 7 in Form von Schrauben bzw. Bolzen, welche jeweilige in den Trägern 5, 6 und den Bauteilen 2 vorgesehene Durchgangsbohrungen durchsetzen, mit den Bauteilen 2 verbunden. Durch die spezielle Anordnung der trägerseitigen Durchgangsbohrungen ist eine gewünschte Anordnung der Halterung 1 relativ zu der Fahrzeugkarosserie im Sinne einer Vorjustage möglich. Die Träger 5, 6 sind aus einem hochsteifen Kunststoffmaterial, d. h. z. B. einem mit Glasfasern verstärktem Polyphenylensulfid (PPS) gebildet.

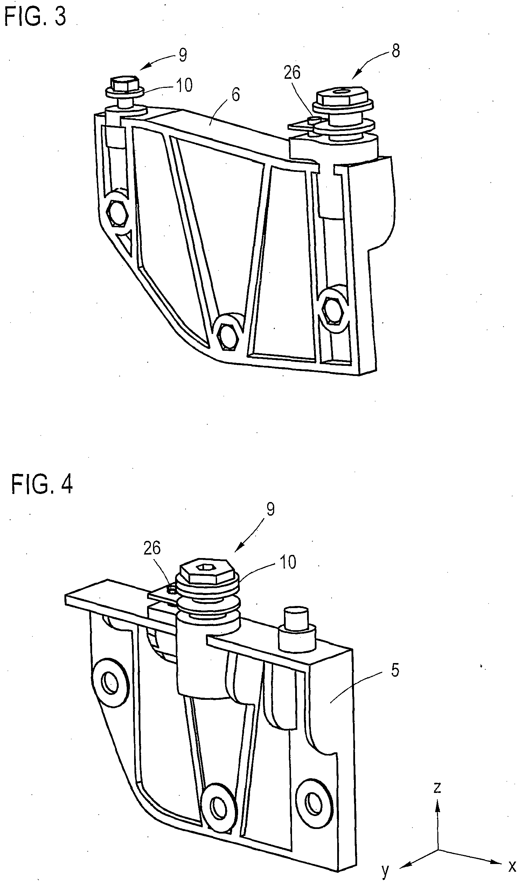

Die Fig. 2, 3, 5 zeigen den in Fig. 1 rechts der Anzeigeeinrichtung 3 respektive des Gehäuses 4 angeordneten Träger 6. Fig. 2 zeigt eine Ansicht der von dem Gehäuse 4 abgewandten Seite des Trägers 6, Fig. 3 zeigt eine Ansicht der dem Gehäuse 4 zugewandten Seite des Trägers 6. Der Träger 6 weist zwei Lagerstellen bzw. Lagerpunkte für die Anzeigeeinrichtung 2 respektive das diese aufnehmende Gehäuse 4 auf. Eine in den Fig. 2, 3 vordere Lagerstelle ist durch eine Lagervorrichtung 8 gebildet. Eine in den Fig. 2, 3 hintere Lagerstelle ist durch eine weitere Lagerstelle 9 gebildet. Die Lagervorrichtung 8 bzw. die Lagerstelle 9 sind jeweils derart ausgebildet, dass sich daran eine Seitenwange 30 (vgl. Fig. 1) des Gehäuses 4 befestigen lässt. Die Befestigung der Seitenwange 30 des Gehäuses 4 ist dadurch realisiert, dass entsprechende Teile der Lagervorrichtung 8 bzw. der Lagerstelle 9 durch hierfür vorgesehene Öffnungen in der Seitenwange 30 greifen. Das Gehäuse 4 ist über die Lagervorrichtung 8 bzw. über die Lagerstelle 9 mit dem Träger 6 verbunden. Sowohl die Lagervorrichtung 8 als auch die Lagerstelle 9 ist mit entsprechenden kugel- oder kalottenförmigen Beilagscheiben 10 versehen, welche eine Reduzierung der beim Verschrauben entstehenden mechanischen Spannungen bedingt.

Im Gegensatz zu der Lagerstelle 9 bietet die Lagervorrichtung 8 die Möglichkeit einer Lage- bzw. Höhenverstellung des Gehäuses 4 und somit der Anzeigeeinrichtung 3. Hierfür ist der Halterung 1 eine mit der Lagervorrichtung 8 zusammenwirkende Verstelleinrichtung 11 zugehörig. Das Gehäuse 4 ist demnach mittels der Verstelleinrichtung 11 in z-Richtung verstellbar. Es handelt sich hierbei um eine Feinverstellung, welche eine hochgenaue Einstellung der z-Position des Gehäuses 4 und somit der Anzeigeeinrichtung 3 ermöglicht.

Fig. 4 zeigt den in Fig. 1 links der Anzeigeeinrichtung 3 respektive des Gehäuses 4 angeordneten Träger 5. Der Träger 5 ist ähnlich dem Träger 6 aufgebaut. Der wesentliche Unterschied zwischen den Trägern 5, 6 ist, dass der Träger 5 nur eine Lagervorrichtung 8, d. h. im Gegensatz zu dem Träger 6 keine weitere Lagerstelle 9 aufweist.

Das Gehäuse 4 und somit die Anzeigeeinrichtung 3 ist sonach an drei Lagerpunkten (Lagervorrichtung 8 und Lagerstelle 9 an Träger 6 und Lagervorrichtung 8 an Träger 5) im Sinne einer Drei-Punkt-Lagerung gelagert. Eine Verstellung in z-Richtung ist sowohl am in Fig.1 linken Träger 5 wie auch am in Fig. 1 rechten Träger 6 über entsprechende Lagervorrichtungen 8 möglich. Das Gehäuse 4 lässt sich demnach grundsätzlich auch kippen, indem eine Höhenverstellung nur an einem Träger 5, 6 durchgeführt wird.

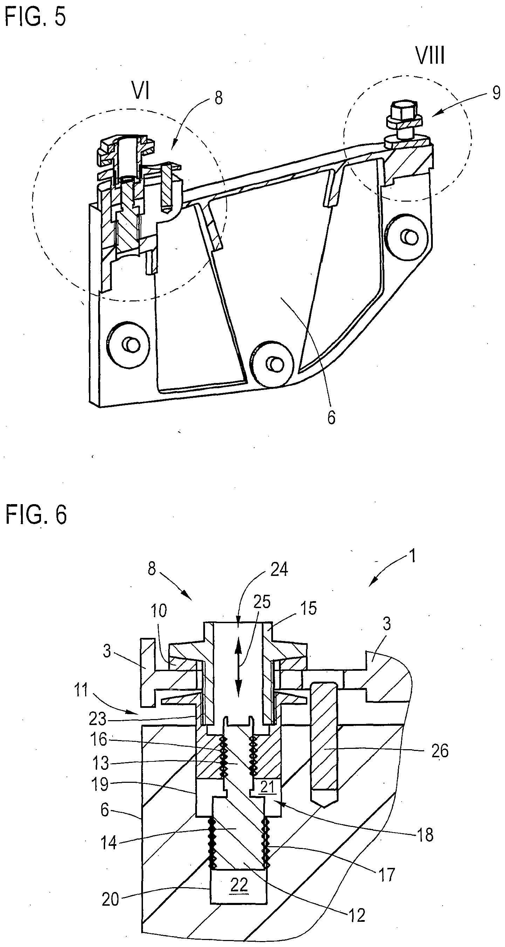

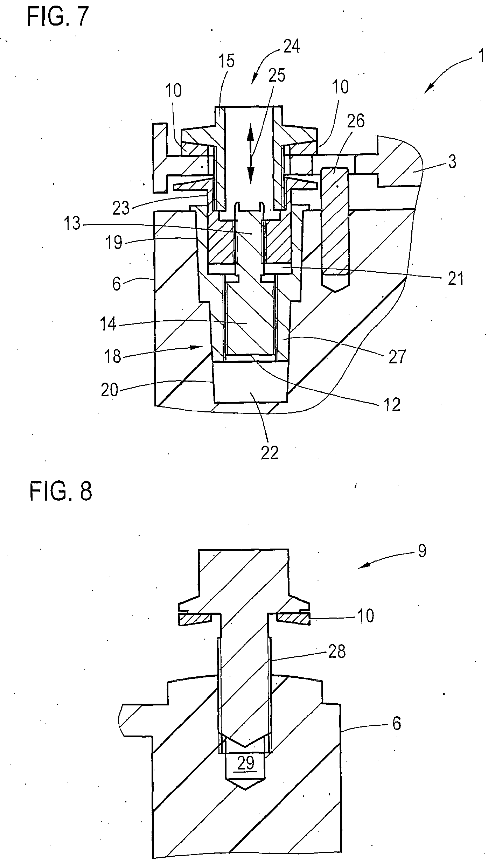

Der genaue Aufbau der Lagervorrichtung 8 respektive der Verstelleinrichtung 11 ist aus den Fig. 6, 7 ersichtlich. Es handelt sich dabei jeweils um Schnittansichten in einer in Richtung der Längsachse der Träger 5, 6 liegenden Schnittrichtung.

Die Verstelleinrichtung 11 umfasst ein zentrales längliches Stellelement 12 in Form einer zylindrischen Spindel. Das Stellelement 12 weist zwei axial benachbarte Kopplungsabschnitte 13, 14 auf. Ein in Fig. 6 oberer, d. h. mit Bezug auf die im montierten Zustand des Trägers 6 befindliche Trägeroberseite weiter außen liegender erster Kopplungsabschnitt 13 dient der Kopplung des Stellelements 12 mit der Lagervorrichtung 8, d. h. insbesondere einem hülsenförmigen Bauteil 15 der Lagervorrichtung 8. Ersichtlich ist der erste Kopplungsabschnitt 13 an einem ersten Durchmesser des Stellelements 12 ausgebildet. Ein in Fig. 6 unterer, d. h. mit Bezug auf die im montierte Zustand des Trägers 6 befindliche Trägeroberseite weiter innen liegender zweiter Kopplungsabschnitt 14 dient der Kopplung des Stellelements 12 mit dem Träger 6. Ersichtlich ist der zweite Kopplungsabschnitt 14 an einem zweiten Durchmesser des Stellelements 12 ausgebildet. Der erste Durchmesser des Stellelements 12 ist kleiner als der zweite Durchmesser des Stellelements 12.

Der erste Kopplungsabschnitt 13 ist mit einem im Weiteren als ersten Gewindeabschnitt 16 bezeichneten Außengewinde versehen. Der zweite Kopplungsabschnitt 14 ist mit einem im Weiteren als zweiten Gewindeabschnitt 17 bezeichneten Außengewinde versehen. Die beiden Gewindeabschnitte 16, 17 sind durch Anbringung eines Gewindeeinsatzes an den jeweiligen Kopplungsabschnitten 13, 14 des Stellelements 12 gebildet. Die Gewindeeinsätze sind drehfest mit dem Stellelement 12, d. h. den jeweiligen Kopplungsabschnitten 13, 14 verbunden.

Das Stellelement 12 ist in einem in dem Träger 5 ausgebildeten sacklochartigen Aufnahmebereich 18 angeordnet. Der Aufnahmebereich 18 ist in zwei Aufnahmebereichabschnitte 19, 20 unterteilt. Die beiden Aufnahmebereichabschnitte 19, 20 definieren jeweilige Aufnahmeräume 21, 22. Die beiden Aufnahmebereichabschnitte 19, 20 und somit die Aufnahmeräume 21, 22 sind mit unterschiedlichen Durchmessern versehen. Der in Fig. 6 obere erste Aufnahmebereichabschnitt 19 weist einen Innendurchmesser auf, der dem Außendurchmesser eines in diesen axial eingeführten Kopplungsteils 23 entspricht. Der in Fig. 6 untere zweite Aufnahmebereichabschnitt 18 weist einen Innendurchmesser auf, der dem Außendurchmesser des zweiten Kopplungsabschnitts 14 des Stellelements 12 entspricht.

Das Kopplungsteil 23 ist als Zwischenglied zwischen das Stellelement 12 und das der Lagervorrichtung 8 zugehörige Bauteil 15 geschaltet. Das Kopplungsteil 23 ist fest mit dem hülsenförmigen Bauteil 15 der Lagervorrichtung 8 verbunden, so dass, wie im Weiteren noch erläutert wird, axiale Bewegungen des Kopplungsteils 23 unmittelbar auf das hülsenförmige Bauteil 15 übertragen werden. Das Stellelement 12 ist demnach mittelbar über das Kopplungsteil 23 mit der Lagervorrichtung 8 respektive dem hülsenförmigen Bauteil 15 verbunden.

Die den jeweiligen Gewindeabschnitten 16, 17 gegenüber liegenden Abschnitte des Kopplungsteils 23 respektive des zweiten Aufnahmebereichabschnitts 20 sind mit nicht näher bezeichneten Gegengewinden versehen. Das Kopplungsteil 23 weist demnach einen an den stellelementseitigen ersten Gewindeabschnitt 16 angepassten Gegengewindeabschnitt auf. Der trägerseitige zweite Aufnahmebereichabschnitt 20 weist entsprechend einen an den stellelementseitigen zweiten Gewindeabschnitt 17 angepassten Gegengewindeabschnitt auf.

Das Stellelement 12 weist nicht nur zwei unterschiedliche Durchmesser auf, an welchen jeweilige Kopplungsabschnitte 13, 14 vorgesehen sind. Auch die an den jeweiligen Kopplungsabschnitten 13, 14 ausgebildeten Gewindeabschnitte 16, 17 sind dahingehend unterschiedlich, als die in den Gewindeabschnitten 16, 17 ausgebildeten Gewinde unterschiedliche Gewindesteigungen aufweisen.

Bei dem ersten Kopplungsabschnitt 13 des Stellelements 12 handelt es sich um ein M5-Gewinde. Der erste Kopplungsabschnitt 13 hat daher einen Außendurchmesser von 5 mm, der erste Gewindeabschnitt 16 hat eine Gewindesteigung von 0,8 mm pro voller Umdrehung des Stellelements 12 um dessen Längsachse. Bei dem an dem zweiten Kopplungsabschnitt 14 des Stellelements 12 ausgebildeten Gewindeabschnitt 17 handelt es sich dahingegen um ein M8-Gewinde. Der zweite Kopplungsabschnitt 14 hat daher einen Außendurchmesser von 8 mm, der zweite Gewindeabschnitt 16 hat eine Gewindesteigung von 1,25 mm pro voller Umdrehung des Stellelements 12 um seine Längsachse. Die tatsächliche Höhenverstellung des Stellelements 12 pro voller Umdrehung (360°-Umdrehung) sowie der an diesem über das Kopplungsteil 23 gekoppelten Lagervorrichtung 8 ergibt sich aus der Differenz der jeweiligen Gewindesteigungen der Gewindeabschnitte 16, 17. Die Differenz der Gewindesteigungen beträgt hier 0,45 mm pro Umdrehung. Entsprechend ist durch eine volle Umdrehung des Stellelements 12 eine Höhenverstellung der Lagervorrichtung 8 von 0,45 mm möglich.

Grundsätzlich kann der erste Kopplungsabschnitt 13 des Stellelements 12 auch als ein anderes als ein M5-Gewinde ausgebildet sein, auch das an dem zweiten Kopplungsabschnitt 14 des Stellelements ausgebildete Gewinde muss kein M8-Gewinde sein. Für die vorliegend Erfindung ist es jedoch wesentlich, dass die beiden Kopplungsabschnitte 13, 14 respektive die an diesen ausgebildeten Gewindeabschnitte 16, 17 unterschiedliche Gewindesteigungen aufweisen.

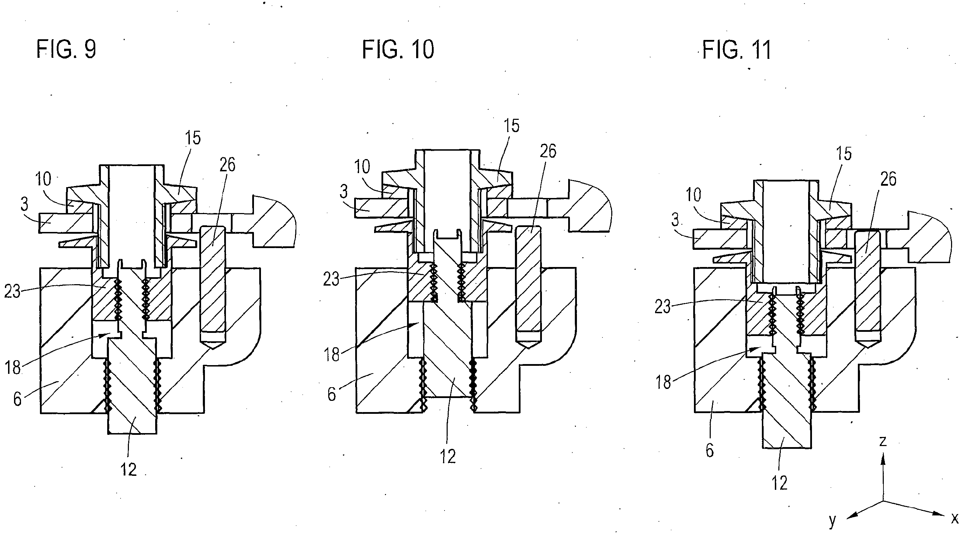

Ersichtlich befindet sich in der Lagervorrichtung 8, d. h. dem hülsenförmigen Bauteil 15 eine axial mit dem Stellelement 12 fluchtende Bohrung 24. Durch die Bohrung kann ein Werkzeug, wie z. B. ein Schraubendreher, eingeführt werden, welches an der mit einem Schraubenkopfantrieb versehenen freiliegenden Stirnseite des Stellelements 12 ansetzt. Derart können Drehmomente auf das Stellelement 12 übertragen werden und das Stellelement 12 axial, d. h. in z-Richtung, innerhalb des Trägers 6 respektive innerhalb des Aufnahmebereichs 18 bewegt werden (vgl. Doppelpfeil 25; Fig. 9-11).

Das Kopplungsteil 23 ist drehfest mit dem Träger 6 verbunden, so dass sich Drehbewegungen des Stellelements 12 nicht auf das Kopplungsteil 23 übertragen lassen. Die drehfeste Lagerung des Kopplungsteils 23 ergibt sich daraus, dass ein von dem Träger 5 abragender Bolzen 26 bzw. Stift durch eine Öffnung in einem von dem Kopplungsteil 23 in Längsrichtung des Trägers 6 ragenden Ansatz oder Flansch greift (vgl. hierzu auch Fig. 4). Hierdurch ist eine Verdrehsicherung des Kopplungsteils 23 realisiert.

Dadurch, dass das Kopplungsteil 23 drehfest mit dem Träger 6 verbunden ist, wird das Kopplungsteil 23 bei einer drehungsbedingt axialen Bewegung des Stellelements 12 nach unten ebenfalls mit nach unten gezogen. Das Kopplungsteil 23 wird dabei verspannt, was zu einer äußerst lage- bzw. positionsstabilen Anordnung bzw. Feststellung der Lagervorrichtung 8 in z-Richtung führt. Insbesondere ist derart eine Selbsthemmung realisierbar, d. h. es ist nicht möglich, dass das Kopplungsteil 23 seine z-Lage ausgehend von einer über eine entsprechende Verdrehung des Stellelements 12 eingestellten z-Lage ändert. Hierdurch ist ein wesentlicher Vorteil im Hinblick auf die hochsensible Einstellung der Lage bzw. Ausrichtung von Head-Up-Displays gegeben. Insgesamt lässt sich derart auf einfache und schnelle Weise eine Feineinstellung bzw. Nachjustierung einer gewünschten Lage bzw. Ausrichtung einer Anzeigeeinrichtung 3 in Form eines Head-Up-Displays realisieren bzw. gegebenenfalls nachholen.

Die in Fig. 7 gezeigte Schnittansicht der Halterung 1 unterscheidet sich von der in Fig. 6 gezeigten Ausführungsform lediglich dadurch, dass die Abmessungen des trägerseitigen Aufnahmebereichs 18 nicht unmittelbar an die Außenabmessungen des Stellelements 12 bzw. des Kopplungsteils 23 angepasst sind. Ersichtlich ist der Innendurchmesser des ersten Aufnahmebereichabschnitts 19 größer als der Außendurchmesser des Kopplungsteils 23. Ebenso ist der Innendurchmesser des zweiten Aufnahmebereichabschnitts 20 größer als der Außendurchmesser des zweiten Kopplungsabschnitts 14 des Stellelements 12. Um die Unterschiede in den jeweiligen Innen- bzw. Außendurchmessern auszugleichen ist ein Hülsenelement 27 in die den trägerseitigen Aufnahmebereich 18 bildende Sackbohrung eingesetzt. Das Hülsenelement 27 ist drehfest mit dem Träger 6 verbunden, was beispielsweise durch Verkleben, Verschweißen, Verpressen etc. realisiert sein kann. Das Hülsenelement 27 weist zwei Außendurchmesser und zwei Innendurchmesser auf, welche an die jeweiligen Innendurchmesser des trägerseitigen Aufnahmebereichs 18 respektive der diesem zugehörigen Aufnahmebereichabschnitte 19, 20 sowie die Außendurchmesser des in den trägerseitigen Aufnahmebereich 18 ragenden Abschnitts des Kopplungsteils 23 sowie des stellelementseitigen zweiten Kopplungsabschnitts 14 angepasst ist. Das Hülsenelement 27 kann aus einem metallischen Werkstoff, wie z. B. Stahl, oder einem stabilen Kunststoffmaterial, wie z. B. Polyamid, gebildet sein.

Fig. 8 zeigt eine vergrößerte Ansicht der in Fig. 5 gezeigten Einzelheit VIII. Hieraus ist der Aufbau der Lagerstelle 9 ersichtlich. Die Lagerstelle 9 ist durch ein schraubenartiges Befestigungselement 28 gebildet, welches mit einem axialen Fortsatz in eine trägerseitige Sackbohrung 29 greift. An der Unterseite eines im Vergleich zu dem axialen Fortsatz radial aufgeweiteten Kopfes des Befestigungselements 28 ist eine Beilagscheibe 10 angeordnet. Die Beilagscheibe 10 ist an deren dem Kopf abgewandten Seite kalottiert, d. h. mit einer Abrundung versehen, ausgebildet. Entsprechend ist der der Beilagscheibe 10 gegenüber liegend angeordnete Oberflächenabschnitt des Trägers 6 im Bereich um die Sacklochbohrung kalottiert, d. h. mit einer entsprechenden Abrundung versehen, ausgebildet. Derart können mechanische Spannungen bei der Befestigung der Anzeigeeinrichtung 3 reduziert werden. Das Bolzenelement 28 kann auch in ein in eine entsprechende trägerseitige Sackbohrung 29 eingesetztes Hülsenelement (nicht gezeigt) eingesetzt werden. Bolzenelement 28 und Hülsenelement können dabei eine gemeinsame, d. h. gemeinsam mit dem Träger 6 verbindbare, Bauteileinheit bilden.

Die Fig. 9 - 11 zeigen verschiedene Ansichten einer Lagervorrichtung 8 samt einer Verstelleinrichtung 11 einer Halterung 1 gemäß einer beispielhaften Ausführungsform der Erfindung. Die Lagervorrichtung 8 befindet sich dabei in der in Fig. 9 gezeigten z-Position in einer Referenzlage. Fig. 10 zeigt eine zu der in Fig. 9 gezeigten z-Position um einen gewissen z-Betrag, d. h. ca. 1,5 mm, nach oben versetzte Position der Lagervorrichtung 8, wohingegen Fig. 11 eine um einen gewissen z-Betrag, d. h. ca. 1,5 mm, zu der in Fig. 9 gezeigten z-Position nach unten versetzte Position der Lagervorrichtung 8 zeigt.

## Patentansprüche

1. Halterung (1) für eine in einem Kraftfahrzeug, insbesondere einer kraftfahrzeugseitigen Armatur, zu halternde, insbesondere einen Teil eines Head-Up-Displays bildende, Anzeigeeinrichtung (3), umfassend wenigstens einen Träger (5, 6) mit wenigstens einer Lagervorrichtung (8) zur Lagerung der Anzeigeeinrichtung (3), wobei die Lagervorrichtung (8) über eine trägerseitig angeordnete Verstelleinrichtung (11) relativ zu dem Träger (5, 6) lageverstellbar ist, wobei die Verstelleinrichtung (11) ein relativ zu dem Träger (5, 6) lageverstellbares Stellelement (12) mit einem ersten Kopplungsabschnitt (13) zur Kopplung mit der Lagervorrichtung (8) und mit einem zweiten Kopplungsabschnitt (14) zur Kopplung mit dem Träger (5, 6) umfasst, wobei der zweite Kopplungsabschnitt (14) umfangsmäßig mit einem zweiten Gewindeabschnitt (17) versehen ist,
**dadurch gekennzeichnet,**
**dass** der erste Kopplungsabschnitt (13) umfangsmäßig mit einem ersten Gewindeabschnitt (16) versehen ist, wobei die beiden Gewindeabschnitte (16, 17) unterschiedliche Gewindesteigungen aufweisen.

2. Halterung nach Anspruch 1,
**dadurch gekennzeichnet,**
**dass** der erste und/oder der zweite Gewindeabschnitt (16, 17) durch einen den ersten und/oder zweiten Kopplungsabschnitt (13, 14) klemmend umgebenden Gewindeeinsatz gebildet ist.

3. Halterung nach Anspruch 1 oder 2,
**dadurch gekennzeichnet,**
**dass** das Stellelement (12) als Spindel ausgebildet ist, wobei der erste und der zweite Kopplungsabschnitt (13, 14) unterschiedliche Durchmesser aufweisen und der Durchmesser des ersten Kopplungsabschnitts (13) kleiner als der Durchmesser des zweiten Kopplungsabschnitts (14) ist.

4. Halterung nach einem der vorangehenden Ansprüche,
**dadurch gekennzeichnet,**
**dass** in dem Träger (5, 6) ein Aufnahmebereich (18) für das Stellelement (12) ausgebildet ist, wobei der erste Kopplungsabschnitt (13) des Stellelements (12) in einem ersten Aufnahmebereichabschnitt (19) mit einem ersten Durchmesser anordenbar oder angeordnet ist und der zweite Kopplungsabschnitt (14) des Stellelements (12) in einem zweiten Aufnahmebereichabschnitt (20) mit einem zweiten Durchmesser anordenbar oder angeordnet ist.

5. Halterung nach einem der vorangehenden Ansprüche,
**dadurch gekennzeichnet,**
**dass** der erste Gewindeabschnitt (16) unmittelbar in einen, insbesondere mit einem dem ersten Gewindeabschnitt (16) entsprechenden Gegengewindeabschnitt versehenen, Teil der Lagervorrichtung (8) greift, wobei die Lagervorrichtung (8) drehfest gelagert ist, oder der erste Gewindeabschnitt (16) in einen, insbesondere mit einem dem ersten Gewindeabschnitt entsprechenden Gegengewindeabschnitt versehenen, Teil eines zwischen dem ersten Kopplungsabschnitt (13) und einem Teil der Lagervorrichtung (8) angeordneten, die Lagervorrichtung (8) lagernden Kopplungsteils (23) greift, wobei das Kopplungsteil (23) drehfest gelagert ist.

6. Halterung nach Anspruch 5,
**dadurch gekennzeichnet,**
**dass** der erste Gewindeabschnitt (16) in einen dem Durchmesser des ersten Kopplungsabschnitts (13) entsprechenden, insbesondere mit einem dem ersten Gewindeabschnitt (16) entsprechenden Gegengewindeabschnitt versehenen, zylindrischen Aufnahmeraum (21) des Kopplungsteils (23) und der zweite Gewindeabschnitt (17) in einen, insbesondere mit einem dem zweiten Gewindeabschnitt (17) entsprechenden Gegengewindeabschnitt versehenen, dem Durchmesser des zweiten Kopplungsabschnitts (14) entsprechenden zylindrischen Aufnahmeraum (22) des Trägers (5, 6) greift.

7. Halterung nach Anspruch 5 oder 6,
**dadurch gekennzeichnet,**
**dass** in dem Träger (5, 6) ein Aufnahmebereich (18) für das Stellelement (12) und das Kopplungsteil (23) ausgebildet ist, wobei das Kopplungsteil (23) in einem ersten Aufnahmebereichabschnitt (19) mit einem ersten Durchmesser anordenbar oder angeordnet ist und der zweite Kopplungsabschnitt (14) des Stellelements (12) in einem zweiten Aufnahmebereichabschnitt (20) mit einem zweiten Durchmesser anordenbar oder angeordnet ist.

8. Halterung nach einem der vorangehenden Ansprüche,
**dadurch gekennzeichnet,**
**dass** die Lagervorrichtung (8) eine Bohrung (24) aufweist, durch welche eine Zugangsmöglichkeit zu einer freiliegenden Stirnseite des Stellelements (12) gebildet ist.

9. Halterung nach einem der vorangehenden Ansprüche,
**dadurch gekennzeichnet,**
**dass** in dem Träger (5, 6) wenigstens eine, insbesondere drei, Anbindungsstelle, insbesondere in Form einer Durchgangsbohrung, zur Anbindung des Trägers (5, 6) an eine Fahrzeugkarosserie ausgebildet ist.

10. Halterung nach einem der vorangehenden Ansprüche,
**dadurch gekennzeichnet,**
**dass** der Träger (5, 6) aus einem, insbesondere mit Verstärkungsfasern versehenen, Kunststoffmaterial gebildet ist.

11. Halterung nach einem der vorangehenden Ansprüche,
**dadurch gekennzeichnet,**
**dass** ein weiterer Träger (6) vorgesehen ist, wobei wenigstens einer der beiden Träger (5, 6), insbesondere beide Träger (5, 6), wenigstens eine entsprechende Lagervorrichtung (8) aufweist.

12. Halterung nach Anspruch 11,
**dadurch gekennzeichnet,**
**dass** ein erster Träger (6) eine entsprechende Lagervorrichtung (8) sowie einen weiteren Lagerpunkt zur Lagerung der Anzeigeeinrichtung (3) und ein zweiter Träger (5) nur eine entsprechende Lagervorrichtung (8) aufweist.

## Claims

1. Holder (1) for a display device (3) which is to be held in a motor vehicle, particularly in a fitting in the motor vehicle, and which in particular forms a part of a head-up display, comprising at least one carrier (5, 6) having at least one bearing apparatus (8) for supporting the display apparatus (3), the bearing apparatus (8) being adjustable in position relative to the carrier (5, 6) by means of an adjusting device (11) arranged on the carrier, wherein
the adjusting device (11) comprises a setting element (12) which can be adjusted in position relative to the carrier (5, 6) and has a first coupling section (13) for coupling to the bearing apparatus (8) and a second coupling section (14) for coupling to the carrier (5, 6), the second coupling section (14) being provided circumferentially with a second screw-threaded section (17),
**characterised in that**
the first coupling section (13) is provided circumferentially with a first screw-threaded section (16), the two screw-threaded sections (16, 17) having different screw-thread pitches.

2. Holder according to claim 1,
**characterised in that**
the first and/or second screw-threaded section (16, 17) is formed by a screw-threaded insert which encloses the first and/or second coupling section (13, 14) in a clamping manner.

3. Holder according to claim 1 or 2,
**characterised in that**
the setting element (12) is configured as a spindle, the first and the second coupling sections (13, 14) having different diameters, and the diameter of the first coupling section (13) being smaller than the diameter of the second coupling section (14).

4. Holder according to any one of the preceding claims,
**characterised in that**
a receiving area (18) for the setting element (12) is formed in the carrier (5, 6), wherein the first coupling section (13) of the setting element (12) can be arranged or is arranged in a first receiving area section (19) with a first diameter, and the second coupling section (14) of the setting element (12) can be arranged or is arranged in a second receiving area section (20) with a second diameter.

5. Holder according to any one of the preceding claims,
**characterised in that**
the first screw-threaded section (16) engages directly in a part of the bearing apparatus (8), provided in particular with a counter-threaded section corresponding to the first screw-threaded section (16), wherein the bearing apparatus (8) is supported in a rotationally secure manner, or the first screw-threaded section (16) engages in a part, which is provided in particular with a counter-threaded section corresponding to the first screw-threaded section, of a coupling part (23) which is arranged between the first coupling section (13) and a part of the bearing apparatus (8) and supports the bearing apparatus (8), wherein the coupling part (23) is supported in a rotationally secure manner.

6. Holder according to claim 5,
**characterised in that**
the first screw-threaded section (16) engages in a cylindrical receiving space (21) of the coupling part (23), corresponding to the diameter of the first coupling section (13) and in particular provided with a counter-threaded section corresponding to the first screw-threaded section (16), and the second screw-threaded section (17) engages in a cylindrical receiving space (22) of the carrier (5, 6), which is in particular provided with a counter-threaded section corresponding to the second screw-threaded section (17) and corresponds to the diameter of the second coupling section (14).

7. Holder according to claim 5 or 6,
**characterised in that**
a receiving area (18) for the setting element (12) and the coupling part (23) is formed in the carrier (5, 6), wherein the coupling part (23) can be arranged or is arranged in a first receiving area section (19) with a first diameter, and the second coupling section (14) of the setting element (12) can be arranged or is arranged in a second first receiving area section (20) with a second diameter.

8. Holder according to any one of the preceding claims,
**characterised in that**
the bearing apparatus (8) has a bore (24) by means of which it is possible to access an exposed end side of the setting element (12).

9. Holder according to any one of the preceding claims,
**characterised in that**
at least one, in particular three, connecting positions, particularly in the form of a through-bore, for connecting the carrier (5, 6) to a motor vehicle bodywork are formed in the carrier (5, 6).

10. Holder according to any one of the preceding claims,
**characterised in that**
the carrier (5, 6) is formed from a plastic material, in particular provided with reinforcing fibres.

11. Holder according to any one of the preceding claims,
**characterised in that**
a further carrier (6) is provided, at least one of the two carriers (5, 6), in particular both carriers (5, 6), having at least one corresponding bearing apparatus (8).

12. Holder according to Claim 11,
**characterised in that**
a first carrier (6) has a corresponding bearing apparatus (8) as well as a further bearing point for supporting the display device (3), and a second carrier (5) only has a corresponding bearing apparatus (8).

## Revendications

1. Fixation (1) pour un dispositif d'affichage (3) à fixer dans un véhicule automobile, en particulier dans un tableau de bord du véhicule automobile, et formant en particulier une partie d'un affichage tête-haute, comprenant au moins un support (5, 6) pourvu au moins d'un dispositif de logement (8) pour loger le dispositif d'affichage (3), la position du dispositif de logement (8) étant ajustable par rapport au support (5, 6) par l'intermédiaire d'un dispositif d'ajustement (11) disposé du côté du support,
le dispositif d'ajustement (11) comprenant un élément de réglage (12) dont la position peut être ajustée par rapport au support (5, 6), qui est pourvu d'une première partie de couplage (13) pour le couplage au dispositif de logement (8) et d'une deuxième partie de couplage (14) pour le couplage au support (5, 6), la deuxième partie de couplage (14) étant munie sur sa circonférence d'une deuxième partie filetée (17),
**caractérisée en ce**
**que** la première partie de couplage (13) est munie sur sa circonférence d'une première partie filetée (16), les deux parties filetées (16, 17) présentant des pas de filetage différents.

2. Fixation selon la revendication 1,
**caractérisée en ce**
**que** la première et/ou la deuxième partie filetée (16, 17) sont formées par un insert fileté entourant par serrage la première et/ou la deuxième partie de couplage (13, 14).

3. Fixation selon la revendication 1 ou 2,
**caractérisée en ce**
**que** l'élément de réglage (12) est réalisé sous la forme d'une broche, la première et la deuxième partie de couplage (13, 14) présentant des diamètres différents et le diamètre de la première partie de couplage (13) étant inférieur au diamètre de la deuxième partie de couplage (14).

4. Fixation selon l'une quelconque des revendications précédentes,
**caractérisée en ce**
**qu'**une zone de réception (18) pour l'élément de réglage (12) est réalisée dans le support (5, 6), la première partie de couplage (13) de l'élément de réglage (12) pouvant être disposée ou étant disposée dans une première partie de zone de réception (19) présentant un premier diamètre et la deuxième partie de couplage (14) de l'élément de réglage (12) pouvant être disposée ou étant disposée dans une deuxième partie de zone de réception (20) présentant un deuxième diamètre.

5. Fixation selon l'une quelconque des revendications précédentes,
**caractérisée en ce**
**que** la première partie filetée (16) saisit directement une partie du dispositif de logement (8) munie en particulier d'une partie filetée complémentaire correspondant à la première partie filetée (16), le dispositif de logement (8) étant logé de manière solidaire en rotation, ou la première partie filetée (16) saisit une partie, munie en particulier d'une partie filetée complémentaire correspondant à la première partie filetée, d'une pièce de couplage (23) disposée entre la première partie de couplage (13) et une partie du dispositif de logement (8) et logeant le dispositif de logement (8), la pièce de couplage (23) étant logée de manière solidaire en rotation.

6. Fixation selon la revendication 5,
**caractérisée en ce**
**que** la première partie filetée (16) saisit un espace de réception (21) cylindrique correspondant au diamètre de la première partie de couplage (13), en particulier muni d'une partie filetée complémentaire correspondant à la première partie filetée (16), de la pièce de couplage (23), et la deuxième partie filetée (17) saisit un espace de réception (22) cylindrique muni en particulier d'une partie filetée complémentaire correspondant à la deuxième partie filetée (17), correspondant au diamètre de la deuxième partie de couplage (14), du support (5, 6).

7. Fixation selon la revendication 5 ou 6,
**caractérisée en ce**
**qu'**une zone de réception (18) pour l'élément de réglage (12) et pour la pièce de couplage (23) est réalisée dans le support (5, 6), la pièce de couplage (23) pouvant être disposée ou étant disposée dans une première partie de zone de réception (19) présentant un premier diamètre et la deuxième partie de couplage (14) de l'élément de réglage (12) pouvant être disposée ou étant disposée dans une deuxième partie de zone de réception (20) présentant un deuxième diamètre.

8. Fixation selon l'une quelconque des revendications précédentes,
**caractérisée en ce**
**que** le dispositif de logement (8) présente un alésage (24), par lequel est formée une possibilité d'accès à un côté frontal dégagé de l'élément de réglage (12).

9. Fixation selon l'une quelconque des revendications précédentes,
**caractérisée en ce**
**qu'**au moins un point de liaison, en particulier trois points de liaison, en particulier sous la forme d'un alésage traversant sont réalisés dans le support (5, 6) aux fins de la liaison du support (5, 6) à une carrosserie de véhicule.

10. Fixation selon l'une quelconque des revendications précédentes,
**caractérisée en ce**
**que** le support (5, 6) est formé à partir d'un matériau plastique, muni en particulier de fibres de renfort.

11. Fixation selon l'une quelconque des revendications précédentes,
**caractérisée en ce**
**qu'**est prévu un autre support (6), au moins l'un des deux supports (5, 6), en particulier les deux supports (5, 6), présentant au moins un dispositif de logement (8) correspondant.

12. Fixation selon la revendication 11,
**caractérisée en ce**
**qu'**un premier support (6) présente un dispositif de logement (8) correspondant ainsi qu'un autre point de logement pour loger le dispositif d'affichage (3), et un deuxième support (5) présente seulement un dispositif de logement (8) correspondant.
